# EUROPÄISCHE PATENTSCHRIFT

(11) **EP 2 611 991 B1**
(45) Veröffentlichungstag und Bekanntmachung des Hinweises auf die Patenterteilung: **07.01.2015**
(21) Anmeldenummer: 11771002.0
(22) Anmeldetag: 16.08.2011
(51) Int. Cl.: F01D 9/04, H01M 8/04, F01D 1/02, H01M 8/10

(54) **BRENNSTOFFZELLENSYSTEM MIT INTEGRALER TURBINEN-/KOMPRESSOR-EINHEIT**
FUEL CELL SYSTEM WITH INTEGRALLY FORMED TURBINE/COMPRESSOR-UNIT
SYSTÈME DE PILE À COMBUSTBLE AVEC UNITÉ INTÉGRALE TURBINE/COMPRESSEUR

(30) Priorität: 30.08.2010 DE 102010035860
(43) Veröffentlichungstag der Anmeldung: 10.07.2013
(73) Patentinhaber: Daimler AG, 70327 Stuttgart (DE)
(72) Erfinder: HAUSMANN, Philipp, 73230 Kirchheim (DE); KNOOP, Andreas, 73728 Esslingen (DE)
(74) Vertreter: JENSEN & SON
(86) Internationale Anmeldenummer: PCT/EP2011/004097
(87) Internationale Veröffentlichungsnummer: WO 2012/031663

(56) Entgegenhaltungen:
- DE-A1- 10 249 384
- DE-A1-102006 003 799
- DE-U1-202005 017 574
- US-A1- 2009 142 644
- US-B1- 7 465 510

## Beschreibung

Die Erfindung betrifft ein Brennstoffzellensystem nach der im Oberbegriff von Anspruch 1 näher definierten Art.

Die gattungsgemäße Patentschrift DE 10 2006 003 799 B4 beschreibt ein vergleichbar aufgebautes Brennstoffzellensystem, bei welchem Druck aus einem Wasserstoffdruckspeicher in einer Turbine entspannt wird. Diese Turbine treibt dann zumindest teilweise eine Rezirkulationsfördereinrichtung im Bereich einer Rezirkulationsleitung um einen Anodenraum wenigstens einer Brennstoffzelle des Brennstoffzellensystems an. Der Aufbau, welcher unterstützend auch einen elektromotorischen Antrieb für Rezirkulationsfördereinrichtungen aufweisen kann, nutzt dabei die Druckenergie in dem Wasserstoffdruckspeicher beim ohnehin notwendigen Entspannen des Wasserstoffs, um diese zum Antrieb der Rezirkulationsfördereinrichtung zu nutzen.

Der Aufbau in dieser gattungsgemäßen Patentschrift ist vergleichsweise komplex und hinsichtlich der Abdichtung und der Mischung des rezirkulierten Gasstroms und des frischen Wasserstoffs aufwändig. Die komplexe Bauform benötigt darüber hinaus vergleichsweise viel Bauraum und ist entsprechend schwer. In der DE 10 2006 003 799 B4 wird außerdem vorgeschlagen, den Wasserstoff mit Hilfe einer Lavaldüse auf Geschwindigkeiten oberhalb der Schallgeschwindigkeit des Wasserstoffs, also auf Geschwindigkeiten über Mach 1, zu beschleunigen. Durch die Verwendung einer Lavaldüse ergibt sich dabei jedoch der Nachteil, dass sich der gewünschte Effekt lediglich bei einem einzigen Lastpunkt oder im Bereich eines einzigen Lastpunkts des Brennstoffzellensystems zu erzielen ist. Nur dort stellt sich nämlich das richtige, von der Länge der Lavaldüse abhängige Druckverhältnis ein. In allen anderen Lastpunkten beziehungsweise Betriebspunkten wird es zu so einem sogenannten senkrechten Verdichtungsstoss kommen. Nach der Lavaldüse liegen dann Geschwindigkeiten vor, welche kleiner als die Schallgeschwindigkeit sind.

Ferner wird auf die DE 10 2008 045 170 A1 verwiesen. Diese beschreibt die Nutzung der beim Entspannen von Wasserstoff aus einem Wasserstoffdruckspeicher entstehende Wärmesenke, um wärmeerzeugende Komponenten in dem Brennstoffzellensystem zu kühlen.

Zum weiteren allgemeinen Stand der Technik wird außerdem auf das deutsche Gebrauchsmuster DE 20 2005 017 574 U1 verwiesen. Dieses beschäftigt sich mit einem Spaltrohrmotor zum Antreiben einer Rezirkulationsfördereinrichtung zur Rezirkulation von Anodenabgas um den Anodenraum einer Brennstoffzelle. Der Vorteil eines derartigen Spaltrohrmotors liegt darin, dass der wasserstoffführende Bereich zusammen mit dem Rotor hermetisch gegenüber dem Stator des Spaltrohrmotors abgedichtet werden kann, sodass keine Komplikationen hinsichtlich der Abdichtung wasserstoffführender Bereiche zu befürchten sind.

Die Aufgabe der hier vorliegenden Erfindung besteht nun darin, ein Brennstoffzellensystem mit den aus dem Oberbegriff des Anspruchs 1 bekannten Merkmalen dahingehend zu verbessern, dass die oben genannten Nachteile vermieden werden und dass ein sehr kompaktes und energieeffizientes Brennstoffzellensystem bereitgestellt werden kann.

Erfindungsgemäß wird diese Aufgabe durch die im kennzeichnenden Teil von Anspruch 1 genannten Merkmale gelöst. Vorteilhafte Ausgestaltungen hiervon ergeben sich aus den hiervon abhängigen Unteransprüchen. Verfahrensgemäße Lösungen zum Betreiben eines derartigen Brennstoffzellensystems, gegebenenfalls in einer der Ausgestaltungsvarianten, ergeben sich ferner aus den Verfahrensansprüchen.

Die erfindungsgemäße Kombination von Verdichterrad und Turbine in einem einzigen Bauteil ist einfach und effizient und lässt sich in einer sehr kompakten Bauweise realisieren. Damit wird neben der hohen Energieeffizienz durch die Nutzung des Drucks des Wasserstoffs nach dem Druckregler des Druckgasspeichers außerdem ein sehr kompakter Aufbau der Vorrichtung erreicht. Dieser lässt sich entsprechend einfach, leicht und mit geringem Bauvolumen realisieren. Dies spart neben dem Bauvolumen außerdem Gewicht und Kosten ein.

In einer besonders günstigen Weiterbildung des erfindungsgemäßen Brennstoffzellensystems ist es darüber hinaus vorgesehen, dass der Wasserstoff über eine Düse auf die Turbine strömt, welche eine Düsennadel aufweist, wobei durch eine Relativbewegung der Düse gegenüber der Düsennadel der Durchfluss an Wasserstoff einstellbar ist. Der Durchfluss an Wasserstoff durch die Düse durch ist eine verschiebbare Düsennadel - oder umgekehrt - einstellbar, und kann somit der jeweiligen Lastanforderung beziehungsweise dem jeweiligen Betriebspunkt des Brennstoffzellensystems angepasst werden. Um eine möglichst hohe Geschwindigkeit am Düsenaustritt zu erreichen, sollte es sich bei der sich aus Nadel und Düse ergebenden Kreisringfläche um die engste Stelle der Wasserstoffdosiervorrichtung handeln. Wenn gleichzeitig ein sogenanntes kritisches Druckverhältnis vorliegt, wird dann, angetrieben durch dieses Druckverhältnis, an der engsten Stelle des Nadelventils die Schallgeschwindigkeit des Wasserstoffs erreicht. Der Wasserstoff tritt dann in idealer Weise mit Mach 1 in die Turbine ein.

In einer weiteren sehr vorteilhaften Ausgestaltung des erfindungsgemäßen Brennstoffzellensystems ist es vorgesehen, dass die Turbine als Peltonturbine ausgebildet ist. Eine solche Peltonturbine nutzt die von einem Gasstrahl, welcher beispielsweise gemäß der oben dargelegten Ausgestaltung über eine Düse erzeugt werden kann, aufgebrachte Energie vergleichsweise effizient, sodass mit der Peltonturbine eine besonders hohe Energieausbeute zu erzielen ist. Damit kann der Energiebedarf, welcher durch andere Antriebsmittel aufgebracht werden muss, minimiert werden, sodass insgesamt der Wirkungsgrad des Brennstoffzellensystems gesteigert werden kann.

In einer weiteren sehr günstigen und vorteilhaften Variante des erfindungsgemäßen Brennstoffzellensystems ist es ferner vorgesehen, dass das Bauteil Kanäle aufweist, welche den Bereich der Turbine und den Bereich des Verdichterrads miteinander verbinden. Neben dem reinen Impulsaustausch zwischen dem sich entspannenden Wasserstoffgas unter hohem Druck und der Turbine kommt es so außerdem zu einem Überströmen von Gas aus dem Bereich der Turbine, nachdem dieses einen Impuls auf die Turbine abgegeben hat, in den Bereich des Verdichterrads. Damit wird der über das Verdichterrad geförderte Volumenstrom des rezirkulierten Abgases ideal mit dem über die Kanäle aus dem Bereich der Turbine in den Bereich des Verdichterrads eindringenden Volumenstrom des frischen Wasserstoffs vermischt, sodass nach der Rezirkulationsfördereinrichtung ein sehr gut vermischter und sehr homogener Gasstrom aus frischem Wasserstoff und rezirkuliertem Anodenabgas vorliegt. Dadurch lässt sich die Wegstrecke zwischen der Rezirkulationsfördereinrichtung und dem Anodenraum der Brennstoffzelle verkürzen, da diese nicht mehr genutzt werden muss, um die Gleichverteilung des Gases sicherzustellen. Auch hierdurch lässt sich bei dem Brennstoffzellensystem wiederum Bauraum und Material für Leitungen einsparen. Neben der Einsparung an Bauraum kommt es dadurch auch zu einer Einsparung an Gewicht und Kosten.

In einer günstigen Ausgestaltung der Erfindung ist es ferner vorgesehen, dass die Kanäle vom Bereich der Turbine ausgehend so ausgebildet sind, dass der durch die Kanäle strömende Wasserstoff im Wesentlichen gleichgerichtet zur Strömung des Abgases in dem Verdichterrad in den Bereich des Verdichterrads einströmt. Bei einer Ausbildung des Verdichterrads als Impulsaustauschmaschine beziehungsweise Seitenkanalverdichter wird so erreicht, dass ein Impuls des durch die Kanäle strömenden Wasserstoffs durch das gleichgerichtete Hinzuströmen zu dem geförderten Abgas so genutzt werden kann, dass dieser die Drallbewegung des Abgases durch die geschickte Ausgestaltung der Kanäle unterstützt. Dadurch, dass die natürliche Drallbewegung des Abgases durch den hinzuströmenden frischen Wasserstoff unterstützt wird, lässt sich der Wirkungsrad des Verdichterrads erhöhen.

In einer vorteilhaften Weiterbildung des erfindungsgemäßen Brennstoffzellensystems ist es außerdem vorgesehen, dass das Bauteil über einen elektrischen Antriebsmotor antreibbar ist, wobei der Antriebsmotor als Flachmotor ausgebildet ist. Typischerweise kann es notwendig sein, dass zusätzlich zum Antrieb der Rezirkulationsfördereinrichtung über die Turbine ein weiterer Antrieb vorhanden ist, um beispielsweise die Rezirkulationsfördereinrichtung auch im Leerlauf des Brennstoffzellensystems weiterhin betreiben zu können, um so die Gleichverteilung der Gase im Rezirkulationskreislauf sicherzustellen. Außerdem kann es in bestimmten Betriebszuständen so sein, dass durch eine sehr geringe zudosierte Menge an frischem Wasserstoff die Energie im Bereich der Turbine alleine nicht zum Antrieb der Rezirkulationsfördereinrichtung ausreicht. Dann kann der elektrische Antriebsmotor das Bauteil und damit insbesondere das Verdichterrad mit antreiben. Der Antriebsmotor soll dabei als Flachmotor ausgebildet sein. Ein derartiger Flachmotor ist ähnlich aufgebaut wie ein Spaltrohrmotor und weist einen Stator und einen hermetisch von diesem abdichtbar ausgebildeten Rotor auf. Anders als bei einem Spaltrohrmotor weist er jedoch eine flache Bauform auf, sodass der Rotor als scheibenförmiges Bauteil beabstandet zum Stator, welcher im Wesentlichen ebenfalls scheibenförmig ausgebildet ist, angeordnet wird. Der Aufbau erlaubt so bei der erforderlichen Abdichtung zwischen Rotor und Stator, welche insbesondere bei einer Wasserstoffatmosphäre durch Dichtungen mit Drehdurchführung praktisch nicht realisierbar wäre, eine sehr kompakte Bauform. Die Anordnung des Rotors gegenüber dem Stator in einem abgedichteten Raum wird auch als Plattendichtung bezeichnet.

In einer besonders günstigen Weiterbildung dieser Idee ist es dabei vorgesehen, dass ein Stator des Flachmotors oberhalb des Bauteils angeordnet ist, wobei das Bauteil mit magnetischen Elementen versehen ist und einen Rotor des Flachmotors bildet. Dies kann beispielsweise dadurch realisiert werden, dass in das Bauteil zusätzliche Magnete eingebracht werden, welche mit ihrem Magnetfeld in Richtung des Stators des Flachmotors zeigen und gegenüber diesem durch eine Wand, welche magnetisch permeabel ist, abgedichtet ist. Eine entsprechende Anregung des Stators sorgt dann für eine Rotation des Rotors und damit eine Rotation des Bauteils, so dass auch eine Rotation des Verdichterrads erfolgt.

In einer günstigen Weiterbildung kann es dabei vorgesehen sein, dass der Rotor gegenüber einem dem Stator abgedichteten Raum angeordnet ist. Dieser Aufbau, wie er bei Flachmotoren oder Spaltrohrmotoren üblich ist, ist insbesondere bei der Verwendung mit der Wasserstoffatmosphäre von besonderem Vorteil, da die Wasserstoffatmosphäre dann vergleichsweise einfach abgedichtet werden kann, da es keine Drehdurchführungen durch Dichtungen oder ähnliches gibt.

In einer besonders günstigen und vorteilhaften Weiterbildung hiervon ist es außerdem vorgesehen, dass der Raum das Innere eines Wasserabscheiders in der Rezirkulationsleitung ist. Der Aufbau und hiervon insbesondere das Bauteil mit der Turbine und dem Verdichterrad kann also direkt in einen Wasserabscheider integriert werden, beispielsweise indem dieser den Deckel eines derartigen Wasserabscheiders bildet. Oberhalb des Wasserabscheiders wird dann der Stator des Flachmotors angeordnet, sodass insgesamt ein sehr kompakter Aufbau entsteht, welcher die Rezirkulationsfördereinrichtung in einen ohnehin vorhandenen Wasserabscheider integriert und mit minimalem zusätzlichem Bauraum gegenüber einem herkömmlichen Wasserabscheider auskommt.

Wie auch aus dem Stand der Technik bekannt, können die Lager des Bauteils zumindest teilweise als Gaslager- beziehungsweise Wasserstofflager ausgebildet sein, welche von Wasserstoff aus dem Bereich des Wasserstoffdruckspeichers betrieben werden. Daneben ist es gemäß einer vorteilhaften Ausgestaltung des erfindungsgemäßen Brennstoffzellensystems vorgesehen, dass zumindest eines der axialen Lager des Bauteils mittels einer Lagerspitze ausgebildet ist. Ein solches Lager mittels einer Lagerspitze setzt auf eine Minimierung der Reibung durch eine spitze oder kugelige Ausformung eines Lagerelements, welches dann in einer korrespondierenden Schale oder idealerweise bei einer kugeligen Ausbildung auf einer korrespondierenden Gegenspitze mit kugeliger Oberfläche läuft. Ein solcher Aufbau kann auch hier realisiert werden, da er mit minimalem Aufwand und minimalen Kosten für ein sehr einfaches und effizientes Axiallager sorgt.

Dabei kann es beispielsweise vorgesehen sein, dass die Lagerspitze kugelig ausgebildet ist und auf einer entsprechend kugeligen Gegenfläche läuft. Eine der Flächen kann dabei aus Keramik, die andere Fläche aus Stahl ausgebildet sein. Mit der Zeit wird sich allenfalls die Stahlspitze abnützen, welche jedoch sehr einfach ausgetauscht werden kann. Das Lager kann beispielsweise über Federelemente oder dergleichen so verspannt werden, dass die Spitzen beziehungsweise Kugeln im regulären Betrieb einander immer mit vergleichbarer Anpresskraft berühren. Ferner kann es vorgesehen sein, dass der Bereich der größten Hertzschen Pressung im Bereich der Kugel, also der Bereich, in dem die Reibungswärme entsteht, über einen Wasserstoffvolumenstrom gekühlt wird.

Ein besonders vorteilhaftes Verfahren zum Antreiben einer Rezirkulationsfördereinrichtung in einem Brennstoffzellensystem nach einem der oben genannten Ansprüche ergibt sich außerdem aus dem kennzeichnenden Teil des Verfahrensanspruchs 18. Das Verfahren sieht dabei vor, dass elektrische Bauteile und/oder magnetische Bauteile und/oder Lager im Bereich der Rezirkulationsfördereinrichtung mittels Wasserstoff gekühlt werden. Da der wesentliche Teil der Rezirkulationsfördereinrichtung mit Lagern und anderen wärmeerzeugenden Bauteilen typischerweise der Bereich um das Bauteil ist, besteht hier die Möglichkeit, durch eine Kühlung mit Wasserstoff eine besonders einfache und effiziente Kühlung zu erreichen, da der Wasserstoff aus dem Tank in etwa die Umgebungstemperatur hat und somit signifikant kühler als der Wasserstoff im Anodenkreislauf sein wird. Dieser kann die Bauteile also kühlen, ohne dass zusätzliche Kühlmedien mit entsprechendem Aufwand hinsichtlich der Abdichtung in den wasserstoffführenden Bereich gebracht werden müssen. Ein weiterer Vorteil dieses Verfahrens besteht darin, dass der Wasserstoff sich dadurch erwärmt. Dies führt zu einer Verringerung der Kondensation von Wasser, wenn der Wasserstoff auf das rezirkulierte Abgas des Anodenraums trifft. Hierdurch wird der Eintrag von Flüssigkeit in den Anodenraum verringert oder idealerweise ganz vermieden, so dass die Leistungsfähigkeit der Brennstoffzelle nicht durch mit flüssigem Wasser "verstopfte" Kanäle im Anodenraum beeinträchtigt wird.

Ein Verfahren zum Antreiben einer Rezirkulationsfördereinrichtung in einem Brennstoffzellensystem nach einem der Ansprüche 2 bis 17 ist außerdem durch das Verfahren im Anspruch 19 beschrieben. Bei diesem Verfahren ist es vorgesehen, dass der Durchfluss durch die Düse so eingestellt wird, dass sich eine Geschwindigkeit des Wasserstoffs beim Eintritt in die Turbine einstellt, welche im Bereich von 0,8 - 1,05 der Schallgeschwindigkeit (Mach 1) des Wasserstoffs liegt. Eine solche Strömungsgeschwindigkeit des Wasserstoffs garantiert einerseits einen hohen Impulsaustausch auf die Turbine, welche insbesondere als Peltonturbine ausgebildet sein kann, und ermöglicht es andererseits, eine kontrollierte Abgabe des Impulses auf die Turbine zu realisieren, da Überschall-Strömungseffekte (Verdichtungsstöße) hier typischerweise nicht auftreten.

In einem besonders günstigen Verfahren zum Antreiben einer Rezirkulationsfördereinrichtung in einem Brennstoffzellensystem nach einem der Ansprüche 9 bis 17 ist es ferner vorgesehen, dass der elektrische Antriebsmotor auf einen konstanten oder annähernd konstanten Betriebspunkt ausgelegt ist. Dieses Auslegen des elektrischen Antriebsmotors auf einen konstanten oder annähernd konstanten Betriebspunkt sowie die Variation der für das Verdichterrad benötigten Antriebsleistung durch eine entsprechende Variation des Wasserstoffstroms auf die Turbine ermöglicht es, einen sehr einfachen und kostengünstigen elektrischen Antriebsmotor mit entsprechend einfacher und kostengünstiger Elektronik zu verwenden, da dieser aufgrund des konstanten oder annähernd konstanten Betriebspunkts, auf welchen er ausgelegt ist, entsprechend einfach und effizient realisiert werden kann und nur eine geringe mechanische Antriebsleistung bereitgestellt werden muss. Eine große Spreizung der Drehzahlen entfällt, sodass hierdurch neben einer Verbesserung des Wirkungsgrads außerdem eine Reduktion von Kosten, Bauraum und Gewicht erreicht werden kann. Der elektrische Antriebsmotor kann dadurch vorzugsweise als Niedervolt-Motor ausgelegt werden.

Weitere vorteilhafte Ausgestaltungen des erfindungsgemäßen Brennstoffzellensystems sowie verfahrenstechnische Aspekte zum Betreiben eines derartigen Brennstoffzellensystems ergeben sich außerdem aus dem Ausführungsbeispiel, welches nachfolgend unter Bezugnahme auf die Figuren näher erläutert wird.

Dabei zeigen:
- Fig. 1: eine schematische Ansicht des für die Erfindung relevanten Abschnitts eines Brennstoffzellensystems;
- Fig. 2: eine Rezirkulationsfördereinrichtung in einem möglichen Aufbau gemäß der Erfindung; und
- Fig. 3: eine mögliche Ausgestaltung eines Lagers in der Rezirkulationsfördereinrichtung.

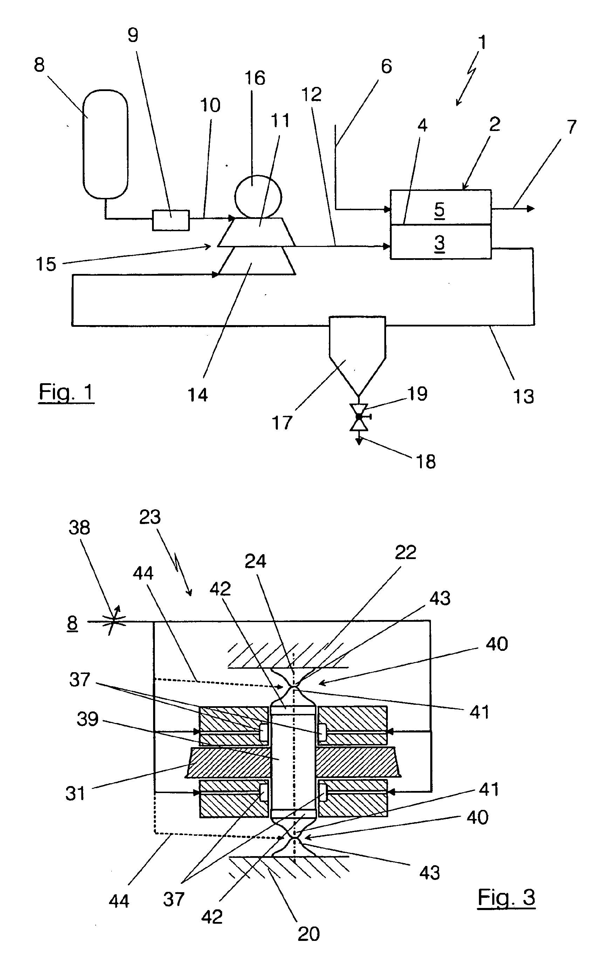

In der Darstellung der Figur 1 ist sehr stark schematisiert ein Ausschnitt aus einem Brennstoffzellensystem 1 zu erkennen. Dieses weist eine Brennstoffzelle 2 auf, welche insbesondere als PEM-Brennstoffzelle ausgebildet sein soll. Bei einer solchen PEM-Brennstoffzelle, welche typischerweise als Stapel aus einer Vielzahl von Einzelzellen aufgestapelt wird, sind Anodenräume 3 über eine protonenleitende Membran 4 von Kathodenräumen 5 getrennt. Den Kathodenräumen beziehungsweise dem Kathodenraum 5 wird dabei über eine Zuluftleitung 6 Luft als Sauerstofflieferant zugeführt, nicht verbrauchte Abluft gelangt über eine Abluftleitung 7 aus dem Brennstoffzellensystem 1. Da der Bereich der Luftversorgung des Kathodenraums 5 für die hier vorliegende Erfindung keine weitere Rolle spielt, wird hierauf nicht näher eingegangen. Dieser kann jedoch in beliebiger an sich bekannter Art und Weise mit entsprechenden Fördereinrichtungen, Luftfiltern, einer Rezirkulation der Abluft, einer Nutzung von Druckenergie und thermischer Energie in der Abluft über eine Turbine oder dergleichen ausgebildet sein.

Dem Anodenraum 3 der Brennstoffzelle 2 wird Wasserstoff aus einem Wasserstoffdruckspeicher 8 zugeführt. In diesem Wasserstoffdruckspeicher 8 wird der Wasserstoff unter hohem Druck, beispielsweise unter Drücken in der Größenordnung von 700 bar, bevorratet. Er gelangt dann über eine Ventileinrichtung 9, beispielsweise ein Absperrventil und ein Druckregler, und eine Wasserstoffzuleitung 10 in den Bereich einer Turbine 11, in welcher der Wasserstoff entspannt wird und dabei Energie an die Turbine 11 abgibt. Über eine Anodenzuleitung 12 gelangt der Wasserstoff dann in den Anodenraum 3. Der Anodenraum 3 wird in dem hier dargestellten Ausführungsbeispiel mit mehr Wasserstoff versorgt, als in diesem elektrochemisch umgesetzt werden kann. Dies ist aus dem Stand der Technik bekannt und allgemein üblich. Die Versorgung des Anodenraums 3 mit mehr Wasserstoff als in diesem umgesetzt werden kann sorgt dafür, dass sämtliche Bereiche des Anodenraums mit ausreichend Wasserstoff versorgt werden und die gesamte aktive Oberfläche der Membran 4 ideal genutzt wird. Das aus dem Anodenraum 3 abströmende Abgas gelangt über eine Rezirkulationsleitung 13 zu einem Verdichterrad 14 und wird von diesem in die Anodenzuleitung 12 und damit in den Anodenraum 3 zurückgefördert. Das Verdichterrad 14 ist dabei ebenso wie die Turbine 11 Teil einer Rezirkulationsfördereinrichtung 15. Das Verdichterrad 14 selbst kann dabei als beliebiger Strömungsverdichter, bevorzugt als Radialverdichter oder Seitenkanalverdichter ausgebildet sein. Die Rezirkulationsfördereinrichtung 15 wird dabei über die Turbine 11 und den darin entspannten Wasserstoff aus der Wasserstoffzuleitung 10 angetrieben und kann zusätzlich Antriebsleistung von einem elektrischen Antriebsmotor 16 aufnehmen, sofern dies zur Förderung des Abgases in der Rezirkulationsleitung 13 notwendig ist. Der Antriebsmotor 16 kann dabei in beliebiger Art und Weise beispielsweise als Hochvolt-Motor oder als Niedervolt-Motor ausgebildet sein. Niedervolt-Motoren mit einer Spannung von weniger als 60 V haben dabei den Vorteil, dass sie typischerweise einfacher und kostengünstiger auszubilden sind. Die Ausbildung des Antriebsmotors 16 als Niedervolt-Motor, insbesondere als 12 V- oder 24 V-Motor wäre daher zu bevorzugen. Prinzipiell wäre es selbstverständlich auch denkbar, bei einem Energieüberschuss im Bereich der Turbine 11 den Antriebsmotor 16 generatorisch zu betreiben, um so elektrische Energie zu erzeugen.

Im Bereich der Rezirkulationsleitung 13 ist außerdem ein Wasserabscheider 17 in an sich bekannter Art und Weise und in an sich bekanntem Aufbau angeordnet. Der Wasserabscheider 17 kann dabei entweder der einzige Wasserabscheider 17 in dem Bereich des Kreislaufs um den Anodenraum 3 sein oder ein zweiter optionaler Wasserabscheider kann zusätzlich im Bereich der Anodenzuleitung 12 angeordnet sein (hier nicht dargestellt). Der Wasserabscheider 17 übernimmt neben dem Abscheiden von flüssigem Wasser aus dem Abgas in der Rezirkulationsleitung 13 außerdem die Funktionalität zum Ablassen von Gas aus dem Bereich der Rezirkulationsleitung 13. Der Aufbau entspricht dabei dem in der WO 2008/052578 A1 beschriebenen Aufbau. In dem durch die Rezirkulationsleitung 13 und die Anodenzuleitung 12 gebildeten Kreislauf um den Anodenraum 3 der Brennstoffzelle 2 reichert sich während des Betriebs einerseits ein kleiner Teil an Wasser an, welcher als Produktwasser teilweise im Anodenraum 3 der Brennstoffzelle entsteht, auch wenn der größte Teil des Produktwassers im Kathodenraum 5 entsteht. Außerdem gelangen durch die Membranen 4 hindurch inerte Gase, wie beispielsweise Stickstoff, mit der Zeit aus dem Kathodenraum 5 in den Bereich des Anodenraums 3 und werden dann, da diese nicht aufgebraucht werden, über die Rezirkulationsfördereinrichtung 15 mit umgewälzt. Über einen längeren Betriebszeitraum hinweg reichert sich damit in dem Kreislauf um den Anodenraum 3 Wasser und inertes Gas an. Die Wasserstoffkonzentration fällt entsprechend ab, sodass die Leistungsfähigkeit der Brennstoffzelle 2 leidet. Das Wasser und das inerte Gas wird daher von Zeit zu Zeit abgelassen. Dies geschieht so, dass der Wasserabscheider 17 über eine Ablassleitung 18 und ein Ablassventil 19, ein sogenanntes Drain/Purge-Ventil 19, verfügt. Nachdem sich eine ausreichende Menge Wasser in dem Wasserabscheider 17 angesammelt hat, kann beispielsweise Wasserstand abhängig oder zeitgesteuert ein Öffnen des Drain/Purge-Ventils 19 erfolgen. Das Wasser strömt dann aus dem Wasserabscheider 17 ab und anschließend wird ein gewisser Anteil des in dem Kreislauf um den Anodenraum 3 angesammelten Gases ebenfalls mit abströmen, sodass nachfolgend die Konzentration des Wasserstoffs sich erhöht. Das abgeführte Wasser und/oder die abgeführten Gase können dabei beispielsweise in den Bereich der Zuluftleitung 6 eingebracht werden oder diese können auch aus dem Brennstoffzellensystem 1 herausgeführt und an die Umgebung abgegeben werden. Da in den Gasen typischerweise Wasserstoff vorhanden ist, sollte dieser entsprechend verdünnt oder nachverbrannt werden, um schädliche Emissionen zu vermeiden.

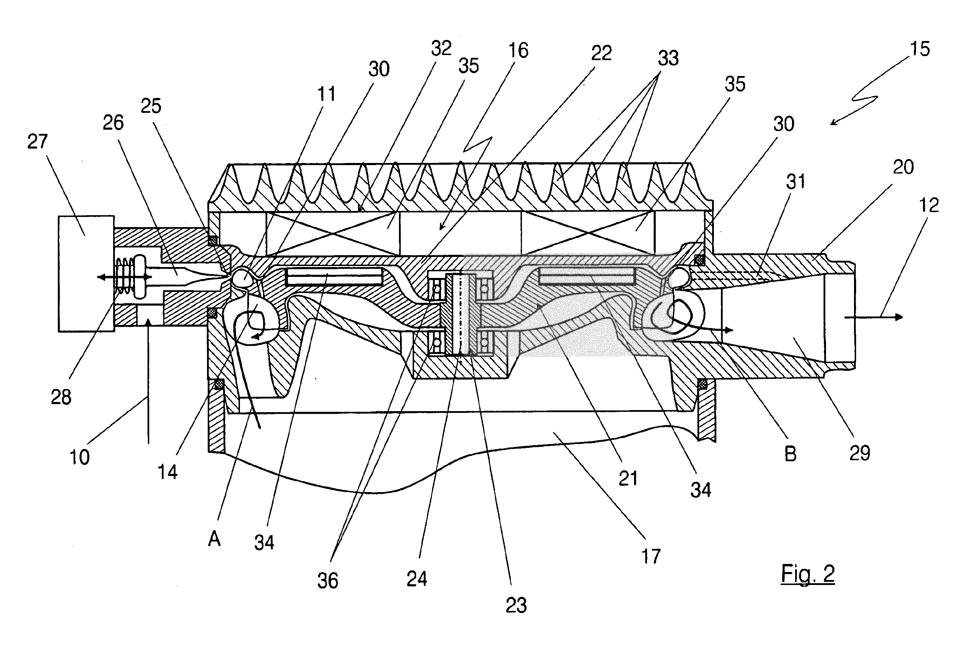

In der Darstellung der Figur 2 ist die Rezirkulationsfördereinrichtung 15 des Brennstoffzellensystems 1 nochmals anhand eines beispielhaften möglichen hochintegrierten Aufbaus beschrieben. Die Rezirkulationsfördereinrichtung 15 ist dabei als Deckel in den Wasserabscheider 17 integriert ausgeführt. Sie besteht im Wesentlichen aus einem Gehäuse 20 sowie einem darin angeordneten drehbeweglichen Bauteil 21, welches die Turbine 11 sowie das Verdichterrad 14 aufweist. Die Turbine 11 ist dabei im in Figur 2 dargestellten oberen Teil des Bauteils 21 zu erkennen. Sie ist beispielhaft als Peltonturbine ausgebildet. In der Darstellung sind hiervon zwei einzelne Schaufeln zu erkennen. Das Bauteil 21 ist im Gehäuse 20 beziehungsweise in einem Gehäusedeckel 22 mit einer Lagerung 23 gelagert, sodass das Bauteil 21 um eine Drehachse 24 rotieren kann. Der Bereich der Turbine 11 wird von Wasserstoff aus dem Wasserstoffdruckspeicher 8 angeströmt, welcher über die Wasserstoffzuleitung 10 in den Bereich einer Düse 25 strömt und von dort auf die Schaufeln der Turbine 11 gelangt. Die Düse 25 ist dabei so ausgebildet, dass eine Düsennadel 26, wie durch den Doppelpfeil angedeutet, über einen Aktuator 27 so verstellt werden kann, dass die Durchströmung der Düse 25 einstellbar ist. Dadurch lässt sich der zugeführte frische Wasserstoff entsprechend dosieren und es lässt sich gleichzeitig eine geeignete Geschwindigkeit einstellen, um die Schaufeln der Turbine 11 idealerweise mit der Schallgeschwindigkeit des Wasserstoffs anzuströmen. Die Düsennadel 26 ist in der hier dargestellten Ausführungsform beispielweise über den Aktuator 27 und eine Rückstellfeder 28 geregelt oder gesteuert. Im Bereich des Druckgasspeichers 8 liegt typischerweise ein Druckniveau von etwa 700 bar vor. Nach der Ventileinrichtung 9 liegt dann ein über den Druckregler der Ventileinrichtung reduzierter Druck in der Größenordnung von 8 bis 15 bar vor. Das Wasserstoffgas, welches mit Schallgeschwindigkeit durch die Düse beziehungsweise das Nadelventil 25 strömt, erfährt somit ein Druckgefälle von ca. 8 bis 15 bar in Strömungsrichtung vor der Düse 25 und ca. 1 bis 3 bar nach der Düse 25, beim Einströmen in die Turbine 11. Dieses Druckgefälle reicht aus, um im Bereich der Kreisringfläche zwischen Düse 25 und Düsennadel 26, welche den engsten Querschnitt der Wasserstoffdosiereinrichtung bildet, eine Geschwindigkeit von Mach 1 zu erzielen.

Durch die Rotation der Turbine 11 wird das gesamte Bauteil 21 in Rotation versetzt, sodass neben der Turbine 11 außerdem das Verdichterrad 14 rotiert. Dieses ist in dem hier dargestellten Ausführungsbeispiel als Seitenkanalverdichter (Impulsaustauschmaschine) ausgebildet, welcher das Abgas aus dem Anodenraum 3 im Wesentlichen in axialer Richtung seiner Drehachse 24 aus dem Wasserabscheider 17 ansaugt, wie dies durch den mit A dargestellten Pfeil angedeutet ist. Das in axialer Richtung angesaugte Abgas A wird im Bereich des Verdichterrads 14 dann entsprechend gefördert und in eine Rotationsbewegung versetzt, ehe es in tangentialer Richtung, wie durch den Pfeil B angedeutet, in den Bereich eines Diffusors 29 abströmt, welcher entweder mit der Anodenzuleitung 12 verbunden ist oder diese selbst bildet. Neben dem als Seitenkanalverdichter ausgebildeten Verdichterrad 14 wären auch alternative Ausgestaltungen beispielsweise in Form eines Radialverdichters ebenso denkbar.

Um den in dem Bereich zur Turbine 11 zudosierten frischen Wasserstoff nun mit dem Abgas A aus dem Anodenraum 3 zu vermischen, sind außerdem Kanäle 30 in dem Bauteil 21 vorgesehen. Diese verbinden den Bereich der Turbine 11, und hier insbesondere den Bereich zwischen den einzelnen Schaufeln der Turbine 11, mit dem Bereich des Verdichterrads 14. Die Kanäle 30 sind dabei so ausgerichtet, dass der sich sammelnde Wasserstoff durch die Kanäle vom Bereich der Turbine 11 in den Bereich des Verdichterrads 14 strömt. Da sich bei dieser Ausgestaltung als Seitenkanalverdichter eine entsprechende Rotationsbewegung des angesaugten Abgases A ergibt, ist die Ausrichtung der Kanäle 30 bei dem hier dargestellten Ausführungsbeispiel so gewählt, dass diese leicht schräg in Richtung der Drehachse 24 verlaufen, sodass das durch die Kanäle 30 strömende Gas gleichgerichtet auf den durch die Pfeile A, B dargestellten Gasstrom des Anodenabgases trifft. Dadurch wird eine sehr gute Vermischung und eine gleichmäßige Verteilung des frischen Wasserstoffs und des Anodenabgases erreicht. Dabei lässt sich weitere im frischen Wasserstoff enthaltene Energie zur Gleichverteilung nutzen. Im Bereich des Diffusors 29 wird die Strömung dann entsprechend beruhigt und verlangsamt, sodass der erforderliche Druck zum Einströmen in den Anodenraum gewährleistet ist.

Sollte die Menge an Wasserstoff, welcher durch die Kanäle 30 vom Bereich der Turbine 11 in den Bereich des Verdichterrads 14 strömt nicht ausreichen, um den gesamten frischen Wasserstoff, welcher zum Betrieb der Brennstoffzelle 2 benötigt wird, bereitzustellen, so kann ein Teil des Wasserstoffs bei Bedarf außerdem über einen optionalen Bypass im Gehäuse 20, welcher dort mit dem Bezugszeichen 31 versehen ist, in den Bereich des Diffusors 30 strömen, um so eine ausreichende Menge an Frischwasserstoff bereitzustellen.

Der Antrieb der Rezirkulationsfördereinrichtung 15 über die Turbine 11 ist dabei über weite Strecken des Betriebs sinnvoll und möglich. Allerdings gibt es Betriebspunkte, beispielsweise den Leerlaufbetrieb oder ähnliches, bei denen keine ausreichende Menge an frischem Wasserstoff zudosiert wird, um das Verdichterrad 14 im Bauteil 21 über die Turbine 11 (alleine) anzutreiben. Für diese Fälle und zum unterstützenden Antrieb in allen anderen Fällen ist daher der elektrische Antriebsmotor 16 vorgesehen. Dieser ist in der Ausgestaltung gemäß Figur 2 als Flachmotor ausgebildet und weist einen über dem Gehäusedeckel 22 angeordneten Stator 32 auf, welcher über Kühlrippen 33 von der umgebenden Atmosphäre gekühlt werden kann. Der Stator 32 ist dabei durch den Gehäusedeckel 22 von dem rotierenden Bauteil 21 getrennt ausgeführt. Durch den Gehäusedeckel 22 kann der Bereich des Bauteils 21 von dem Stator 32 getrennt und gegenüber diesem abgedichtet werden, sodass der im Bereich des rotierenden Bauteils 21 vorliegende Wasserstoff nicht in den Bereich des Stators 32 und aus der Rezirkulationsfördereinrichtung 15 gelangen kann. Durch den Gehäusedeckel 22 hindurch, welcher für magnetische Feldlinien permeabel sein muss, ohne jedoch signifikante Hysterese-Verluste zu erzeugen, erfolgt eine magnetische Kopplung zu Permanentmagneten 34, welche im Bereich des Bauteils 21 angeordnet sind. Diese Permanentmagnete 34 wirken mit Wicklungen 35 des Stators 32 zusammen, sodass das Bauteil 21 unmittelbar einen Rotor des Flachmotors 16 bildet und entsprechend angetrieben werden kann.

Der Rotor in Form des Bauteils 21 ist dabei ständig von Wasserstoff umströmt und dadurch ideal gekühlt. Vergleichbares gilt für die in der Lagerung 23 in dem hier dargestellten Ausführungsbeispiel verwendeten Rillenkugellager 36, über welche das Bauteil 21 in der Darstellung der Figur 2 gelagert ist. Durch die Integration der Lagerung 23 sowie des Bauteils 21 als Rotor des Flachmotors 16 in die Wasserstoffatmosphäre entsteht durch die Verwendung von Wasserstoff als Kühlgas die Möglichkeit einer idealen Kühlung, ohne dass eine Durchführung von flüssigem Kühlmedium oder dergleichen in den Bereich der Wasserstoffatmosphäre hinein und wieder heraus notwendig wäre. Dadurch lassen sich Dichtungsprobleme weitgehend vermeiden.

Die hier dargestellte Lagerung mit den zwei Rillenkugellagern 36 ist dabei effizient und wirksam, jedoch durch die Verwendung von Rillenkugellagern relativ kostenintensiv. Anstelle der Rillenkugellager 36 ließen sich auch andere Lagerkonzepte realisieren, insbesondere eine Gaslagerung mit Wasserstoff als Lagergas sowohl für die Axiallagerung als auch für die Radiallagerung.

In der Darstellung der Figur 3 ist ein möglicher alternativer Aufbau der Lagerung 23 zu erkennen, bei welchem die Radiallagerung über Wasserstofflager erfolgt. In geeigneten Ausnehmungen beziehungsweise Taschen 37 wird Wasserstoff aus dem Bereich des Druckgasspeichers 8 über eine Drossel 38 geleitet, um so eine Gaslagerung mit Wasserstoff für die Radiallagerung einer Welle 39 des Bauteils 21 zu realisieren. Wie bereits erwähnt, könnte eine solche Gaslagerung auch für die Axiallagerung vorgesehen werden. Alternativ dazu ist es auch möglich, die in Figur 3 dargestellte Variante für eine oder, wie hier dargestellt, beide Axiallager einzusetzen. Die Axiallager 40 sind dabei im Wesentlichen mit Lagerspitzen 41 ausgebildet, welche beispielsweise über elastische Elemente 42 im Bereich der Welle 39 des Bauteils 21 befestigt sind. Die Lagerspitzen 41 können dann beispielsweise in entsprechenden Lagerschalen, oder, wie hier dargestellt, in korrespondierenden Lagerspitzen 43, welche mit dem Gehäuse 20 beziehungsweise dem Gehäusedeckel 22 verbunden sind, laufen. In der Darstellung der Figur 3 ist dabei ein Aufbau zu erkennen, bei dem die Lagerspitzen 41, 43 jeweils als kugelförmige Elemente ausgebildet sind, welche aufeinander laufen. Dadurch entsteht eine Gleitlagerung mit minimalem Flächenkontakt. Im Bereich der größten Hertzschen Pressung entsteht auch bei diesen Lagern entsprechend Wärme, sodass diese optional durch Wasserstoff aus den gestrichelt dargestellten Zuführungen 44 gekühlt werden können.

Die Lagerspitzen 41 sind dabei in der idealen Ausgestaltung aus einem möglichst harten Material ausgebildet, beispielsweise aus Kugeln aus Industriekeramik oder ähnlichem. Insbesondere kann der Aufbau dabei so gewählt werden, dass die Lagerspitzen 41 im Bereich der Welle 39 des Bauteils 21 aus einem härteren oder weicheren Material ausgebildet werden als die Lagerspitzen 43 im Bereich des Gehäuses 20 beziehungsweise des Gehäusedeckels 22. Beispielhaft können die Lagerspitzen 41 im Bereich des Bauteils 21 aus gehärtetem Stahl und die Lagerspitzen 43 im Bereich des Gehäuses 20 beziehungsweise des Gehäusedeckels 22 aus Keramik ausgebildet sein. Bei dieser Konstellation wird sich die Lagerspitze 43 aus gehärtetem Stahl schneller abnutzen als die Lagerspitze 41 aus Keramik, welche praktisch keine Abnutzung erfährt. Bei einer Wartung der Rezirkulationsfördereinrichtung 15 könnte in diesem Fall ein Austausch der Lagerspitzen 41 aus gehärtetem Stahl erfolgen, um so über eine lange Lebensdauer de Lagerung 23 hinweg eine möglichst leichtgängige Rotation des Lagers zu gewährleisten. Der in Figur 3 dargestellte Aufbau hat dabei gegenüber den Rillenkugellagern 36, wie sie in Figur 2 dargestellt sind, den entscheidenden Vorteil, dass dieser einfacher und kostengünstiger zu realisieren ist und dass die Lagerreibung minimal wird.

Der Aufbau der Rezirkulationsfördereinrichtung 15 gemäß dem hier dargestellten Ausführungsbeispiel lässt sich dabei sehr kostengünstig, einfach und außerordentlich kompakt aufbauen und beispielsweise, wie in der Figur 2 dargestellt, in einen Wasserabscheider 17 integrieren. Dadurch entsteht ein sehr kompakter und platzsparender Aufbau, welcher durch die ideale Gleichverteilung der Gase außerdem eine sehr kurze Anodenzuleitung 12 ermöglicht. Dadurch, dass ein großer Teil der Antriebsenergie aus der Druckenergie des im Druckgasspeicher 8 abgespeicherten Wasserstoffs über die Turbine 11 gewonnen wird, muss der Flachmotor 16 lediglich in bestimmten Zuständen eingreifen beziehungsweise die Rotation des Bauteils 21 unterstützen. Er kann daher entsprechend klein und effizient ausgelegt werden, was einerseits zu einem geringeren benötigten Bauraum und andererseits zu einfacheren und kostengünstigeren Komponenten für den Flachmotor 16 führt. Außerdem ist es möglich, den Flachmotor 16 lediglich auf einen einzigen Betriebspunkt, welcher konstant oder annähernd konstant ist, auszulegen. Somit wird auch hinsichtlich der Motorelektronik und der Steuerungselektronik nochmals eine deutliche Einsparung erzielt. Dadurch, dass während des regulären Betriebs über die Turbine 11 ein Großteil der Energie aufgebracht werden kann, reicht es aus, wenn der Flachmotor 16 beispielsweise auf den Betrieb im Leerlauf ausgelegt ist. Dynamische Spitzen und dergleichen können über den Wasserstoff aus dem Druckgasspeicher 8 bereitgestellt werden, welcher in diesen Situationen typischerweise ohnehin benötigt wird, da die Brennstoffzelle 2 selbst dann ebenfalls mehr Wasserstoff benötigt, um dynamischen Anforderungen zu entsprechen.

Da der Flachmotor 16 entsprechend einfach ausgelegt werden kann, ist es nun möglich, diesen als Niedervoltmotor, insbesondere als 12 Volt-Motor, aufzubauen. Ein solcher 12 Volt-Motor ist dabei besonders klein und lässt sich entsprechend kostengünstig realisieren. Der Aufbau ermöglicht so nochmals erhebliche Kosteneinsparungen.

Der Aufbau des Brennstoffzellensystems 1 ist dabei, wie bereits mehrfach beschrieben, außerordentlich kompakt, kostengünstig, leicht und stellt einen sehr guten Wirkungsgrad des Brennstoffzellensystems 1 sicher. Seine bevorzugte Anwendung liegt im Bereich von Kraftfahrzeugen und hier insbesondere zum Antreiben von Personenkraftwagen, da hier kostenoptimierte Systeme mit minimalem Bauraum und maximalem Wirkungsgrad ihre besonderen Vorteile ausspielen können, insbesondere wenn ein dynamischer oder hochdynamischer Betrieb des Brennstoffzellensystems 1 benötigt wird.

## Patentansprüche

1. Brennstoffzellensystem (1) mit wenigstens einer Brennstoffzelle (2), welche einen Anodenraum (3) und einen Kathodenraum (4) aufweist, mit einem Wasserstoffdruckspeicher (8), mit einer Rezirkulationsleitung (13), welche einen Ausgang des Anodenraums (3) mit einem Eingang des Anodenraums (3) verbindet, mit einer Rezirkulationsfördereinrichtung (15) mit einem Verdichterrad (14) im Bereich der Rezirkulationsleitung (13), mit einer Turbine (11) zum Entspannen des unter Druck stehenden Wasserstoffs vor dem Eingang in den Anodenraum (3), wobei die Rezirkulationsfördereinrichtung (13) zumindest teilweise von der Turbine (11) angetrieben ist,
**dadurch gekennzeichnet, dass**
die Turbine (11) und das Verdichterrad (14) in einem Bauteil (21) ausgebildet sind.

2. Brennstoffzellensystem nach Anspruch 1,
**dadurch gekennzeichnet, dass**
der Wasserstoff über eine Düse (25) auf die Turbine (11) strömt, welche eine Düsennadel (26) aufweist, wobei durch eine Relativbewegung der Düse (25) gegenüber der Düsennadel (26) der Durchfluss an Wasserstoff einstellbar ist.

3. Brennstoffzellensystem nach Anspruch 1 oder 2,
**dadurch gekennzeichnet, dass**
die Turbine (11) als Peltonturbine ausgebildet ist.

4. Brennstoffzellensystem nach Anspruch 1, 2 oder 3,
**dadurch gekennzeichnet, dass**
das Verdichterrad (14) als Strömungsmaschine ausgebildet ist.

5. Brennstoffzellensystem nach einem der Ansprüche 1 bis 4,
**dadurch gekennzeichnet, dass**
das Verdichterrad (14) als Seitenkanalverdichter ausgebildet ist.

6. Brennstoffzellensystem nach einem der Ansprüche 1 bis 4,
**dadurch gekennzeichnet, dass**
das Verdichterrad (14) als Radialverdichter ausgebildet ist.

7. Brennstoffzellensystem nach einem der Ansprüche 1 bis 6,
**dadurch gekennzeichnet, dass**
das Bauteil (21) Kanäle (30) aufweist, welche den Bereich der Turbine (11) und den Bereich des Verdichterrads (14) miteinander verbinden.

8. Brennstoffzellensystem nach Anspruch 7,
**dadurch gekennzeichnet, dass**
die Kanäle (30) vom Bereich der Turbine (11) ausgehend so ausgebildet sind, dass der durch die Kanäle (30) strömende Wasserstoff im Wesentlichen gleichgerichtet zur Strömung des Abgases in dem Verdichterrad (14) in den Bereich des Verdichterrads (14) einströmt.

9. Brennstoffzellensystem nach einem der Ansprüche 1 bis 8,
**dadurch gekennzeichnet dass**
das Bauteil (21) über einen elektrischen Antriebsmotor (16) antreibbar ist, wobei der Antriebsmotor (16) als Flachmotor (16) ausgebildet ist.

10. Brennstoffzellensystem nach Anspruch 9,
**dadurch gekennzeichnet, dass**
ein Stator (32) des Flachmotors (16) oberhalb des Bauteils (21) angeordnet ist, wobei das Bauteil (21) mit magnetischen Elementen (34) versehen ist, und einen Rotor des Flachmotors (16) bildet.

11. Brennstoffzellensystem nach Anspruch 10,
**dadurch gekennzeichnet, dass**
der Rotor (21) in einem gegenüber dem Stator (32) abgedichteten Raum angeordnet ist.

12. Brennstoffzellensystem nach Anspruch 11,
**dadurch gekennzeichnet, dass**
der Raum das Innere eines Wasserabscheiders (17) in der Rezirkulationsleitung (13) ist.

13. Brennstoffzellensystem nach Anspruch 12,
**dadurch gekennzeichnet, dass**
die Zirkulationsfördereinrichtung (15) einen wasserstoffdichten Deckel des Wasserabscheiders (17) bildet.

14. Brennstoffzellensystem nach einem der Ansprüche 9 bis 13,
**dadurch gekennzeichnet, dass**
der elektrische Antriebsmotor (16) als Niedervoltmotor ausgebildet ist.

15. Brennstoffzellensystem nach einem der Ansprüche 1 bis 14
**dadurch gekennzeichnet, dass**
zumindest ein Axiallager (40) des Bauteils (21) mittels einer Lagerspitze (41) ausgebildet ist.

16. Brennstoffzellensystem nach Anspruch 15,
**dadurch gekennzeichnet, dass**
die Lagerspitze (41) als Kugeloberfläche ausgebildet ist, welche auf einer Gegenkugeloberfläche (43) läuft.

17. Brennstoffzellensystem nach Anspruch 16,
**dadurch gekennzeichnet, dass**
die Lagerspitze (41) über ein axial wirkendes Federelement (42) gegenüber der Gegenkugeloberfläche (43) vorgespannt ist.

18. Verfahren zum Antreiben einer Rezirkulationsfördereinrichtung (15) in einem Brennstoffzellensystem (1) nach einem der Ansprüche 1 bis 17,
**dadurch gekennzeichnet, dass**
elektrische Bauteile und/oder magnetische Bauteile (34) und/oder Lager (23, 36, 40) im Bereich der Rezirkulationsfördereinrichtung (15) mittels des Wasserstoffs gekühlt werden.

19. Verfahren zum Antreiben einer Rezirkulationsfördereinrichtung (15) in einem Brennstoffzellensystem (1) nach einem der Ansprüche 2 bis 17
**dadurch gekennzeichnet, dass**
der Durchfluss des Wasserstoffs durch die Düse (25) so eingestellt wird, dass sich eine Geschwindigkeit des Wasserstoffs beim Eintritt in die Turbine (11) einstellt, welche im Bereich von 0,8 - 1,05 der Schallgeschwindigkeit (Mach 1) des Wasserstoffs liegt.

20. Verfahren zum Antreiben einer Rezirkulationsfördereinrichtung (15) in einem Brennstoffzellensystem (1) nach einem der Ansprüche 9 bis 17,
**dadurch gekennzeichnet, dass**
der elektrische Antriebsmotor (16) auf einen konstanten oder annähernd konstanten Betriebspunkt ausgelegt wird.

## Claims

1. Fuel cell system (1) comprising at least one fuel cell (2) having an anode compartment (3) and a cathode compartment (4), a hydrogen accumulator (8), a recirculation line (13) connecting an outlet of the anode compartment (3) to an inlet of the anode compartment (3), a recirculation promoting device (15) with a compressor wheel (14) in the region of the recirculation line (13), a turbine (11) for decompressing the pressurised hydrogen before its entry into the anode compartment (3), the recirculation promoting device (15) being at least partially driven by the turbine (11),
**characterised in that**
the turbine (11) and the compressor wheel (14) are designed as a single component (21).

2. Fuel cell system according to claim 1,
**characterised in that**
the hydrogen flows onto the turbine (11) via a nozzle (25) having a needle (26), the hydrogen flow being adjustable by means of a movement of the nozzle (25) relative to the needle (26).

3. Fuel cell system according to claim 1 or 2,
**characterised in that**
the turbine (11) is designed as a Pelton turbine.

4. Fuel cell system according to claim 1,2 or 3,
**characterised in that**
the compressor wheel (14) is designed as a flow machine.

5. Fuel cell system according to any of claims 1 to 4,
**characterised in that**
the compressor wheel (14) is designed as a regenerative compressor.

6. Fuel cell system according to any of claims 1 to 4,
**characterised in that**
the compressor wheel (14) is designed as a centrifugal compressor.

7. Fuel cell system according to any of claims 1 to 6,
**characterised in that**
the component (21) comprises passages (30) which connect the region of the turbine (11) and the region of the compressor wheel (14) to one another.

8. Fuel cell system according to claim 7,
**characterised in that**
the passages (30) from the region of the turbine (11) are designed such that the hydrogen flowing through the passages (30) flows into the region of the compressor wheel (14) substantially in the same direction as the flow of exhaust gas in the compressor wheel (14).

9. Fuel cell system according to any of claims 1 to 8,
**characterised in that**
the component (21) is drivable by way of an electric drive motor (16), the drive motor (16) being designed as a flat motor (16),

10. Fuel cell system according to claim 9,
**characterised in that**
a stator (32) of the flat motor (16) is located above the component (21), the component (21) being provided with magnetic elements (34) and forming a rotor of the flat motor (16).

11. Fuel cell system according to claim 10,
**characterised in that**
the rotor (21) is located in a chamber which is sealed against the stator (32).

12. Fuel cell system according to claim 11,
**characterised in that**
the chamber is the interior of a water separator (17) in the recirculation line (13).

13. Fuel cell system according to claim 12,
**characterised in that**
the recirculation promoting device (15) forms a hydrogen-tight cover of the water separator (17).

14. Fuel cell system according to any of claims 1 to 13,
**characterised in that**
the electric drive motor (16) is designed as a low-voltage motor.

15. Fuel cell system according to any of claims 1 to 14,
**characterised in that**
at least one thrust bearing (40) of the component (21) is designed by means of a bearing point (41).

16. Fuel cell system according to claim 15,
**characterised in that**
the bearing point (41) is designed as a spherical surface which runs on a mating spherical surface.

17. Fuel cell system according to claim 16,
**characterised in that**
the bearing point (41) is preloaded against the mating spherical surface (43) by an axially acting spring element (42).

18. Method for driving a recirculation promoting device (15) in a fuel cell system (1) according to any of claims 1 to 17,
**characterised in that**
electric components and/or magnetic components (34) and/or bearings (23, 36, 40) are cooled by means of the hydrogen in the region of the recirculation promoting device (15).

19. Method for driving a recirculation promoting device (15) in a fuel cell system (1) according to any of claims 2 to 17,
**characterised in that**
the flow of hydrogen through the nozzle (25) is adjusted such that the hydrogen enters the turbine (11) at a speed which lies in the range of 0.8 - 1.05 of the speed of sound (Mach 1) of the hydrogen.

20. Method for driving a recirculation promoting device (15) in a fuel cell system (1) according to any of claims 9 to 17,
**characterised in that**
the electric drive motor (16) is designed for a constant or approximately constant operating point.

## Revendications

1. Système de pile à combustible (1) doté d'au moins un élément de combustible (2), qui présente un espace d'anode (3) et un espace de cathode (4), d'un accumulateur de pression d'hydrogène (8), d'une conduite de recirculation (13), qui relie une sortie de l'espace d'anode (3) à une entrée de l'espace d'anode (3), d'un dispositif de recirculation (15) pourvu d'une roue de compresseur (14) dans la zone de la conduite de recirculation (13), d'une turbine (11) destinée à dilater l'hydrogène mis sous pression avant l'entrée dans l'espace d'anode (3), le dispositif de recirculation (13) est au moins en partie entraîné par la turbine (11), **caractérisé en ce que** la turbine (11) et la roue de turbine (14) étant formés dans un élément (21).

2. Système de pile à combustible selon la revendication 1, **caractérisé en ce que** l'hydrogène s'écoule par l'intermédiaire d'un injecteur (25) sur la turbine, laquelle présente une aiguille d'injecteur (25), l'écoulement d'hydrogène pouvant être réglé par un mouvement relatif de l'injecteur (25) par rapport à l'aiguille d'injecteur (26).

3. Système de pile à combustible selon la revendication 1 ou 2, **caractérisé en ce que** la turbine (11) est conçue en tant que turbine de Pelton.

4. Système de pile à combustible selon la revendication 1, 2 ou 3, **caractérisé en ce que** la roue de compresseur (14) est conçue en tant que turbomachine.

5. Système de pile à combustible selon l'une quelconque des revendications 1 à 4, **caractérisé en ce que** la roue de compresseur (14) est conçue en tant que compresseur à canal latéral.

6. Système de pile à combustible selon l'une quelconque des revendications 1 à 4, **caractérisé en ce que** la roue de compresseur (14) est conçue en tant que compresseur radial.

7. Système de pile à combustible selon l'une quelconque des revendications 1 à 6, **caractérisé en ce que** l'élément (21) présente des canaux (30) qui relient la zone de la turbine (11) et la zone de la roue de compresseur (14) l'une à l'autre.

8. Système de pile à combustible selon la revendication 7, **caractérisé en ce que** les canaux (30) provenant de la zone de la turbine (11) sont conçus de manière que l'hydrogène s'écoulant par les canaux (30) dirigé essentiellement dans la même direction que l'écoulement de gaz d'échappement dans la roue de compresseur (14), s'écoule dans la zone de la roue de compresseur (14).

9. Système de pile à combustible selon l'une quelconque des revendications 1 à 8, **caractérisé en ce que** l'élément (21) peut être entraîné par un moteur d'entraînement (16) électrique, le moteur d'entraînement (16) étant conçu en tant que moteur plat (16).

10. Système de pile à combustible selon la revendication 9, **caractérisé en ce qu'**un stator (32) du moteur plat (16) est disposé au-dessus de l'élément (21), l'élément (21) étant doté d'éléments magnétiques (34) et formant un rotor du moteur plat (16).

11. Système de pile à combustible selon la revendication 10, **caractérisé en ce que** le rotor (21) est disposé dans un espace (32) étanche par rapport au stator (32).

12. Système de pile à combustible selon la revendication 11, **caractérisé en ce que** l'espace est l'intérieur d'un séparateur d'eau (17) dans la conduite de recirculation (13).

13. Système de pile à combustible selon la revendication 12, **caractérisé en ce que** le dispositif de recirculation (15) forme un couvercle du séparateur d'eau (17), ledit couvercle étant étanche à l'hydrogène.

14. Système de piles à combustible selon l'une quelconque des revendications 9 à 13, **caractérisé en ce que** le moteur d'entraînement électrique (16) est conçu en tant que moteur basse tension.

15. Système de piles à combustible selon l'une quelconque des revendications 1 à 14, **caractérisé en ce qu'**au moins un palier axial (40) de l'élément (21) est conçu au moyen d'une pointe de pivot (41).

16. Système de pile à combustible selon la revendication 15, **caractérisé en ce que** la pointe de pivot (41) est conçue en tant que surface sphérique, laquelle s'étend sur une contre-surface sphérique (43).

17. Système de pile à combustible selon la revendication 16, **caractérisé en ce que** la pointe de pivot (41) est précontrainte à l'aide d'un élément de ressort (42) agissant axialement par rapport à la contre-surface sphérique (43).

18. Procédé d'entraînement d'un dispositif de recirculation (15) dans un système de pile à combustible (1) selon l'une quelconque des revendications 1 à 17, **caractérisé en ce que** les éléments électriques et/ou les éléments magnétiques (34) et/ou les paliers (23, 36, 40) sont refroidis dans la zone du dispositif de recirculation (15) au moyen de l'hydrogène.

19. Procédé d'entraînement d'un dispositif de recirculation (15) dans un système de pile à combustible (1) selon l'une quelconque des revendications 2 à 17, **caractérisé en ce que** l'écoulement de l'hydrogène est réglé par l'injecteur (25) de manière qu'une vitesse de l'hydrogène à l'entrée de la turbine (11) soit comprise dans une plage entre 0,8 et 1,05 de la vitesse acoustique (Mach 1) de l'hydrogène.

20. Procédé d'entraînement d'un dispositif de recirculation (15) dans un système de pile à combustible (1) selon l'une quelconque des revendications 9 à 17, **caractérisé en ce que** le moteur d'entraînement (16) électrique est dimensionné dans un point de fonctionnement constant ou pratiquement constant.
